# EUROPEAN PATENT APPLICATION

(11) **EP 1 262 774 A1**
(43) Date of publication of application: **04.12.2002**
(21) Application number: 02253648.6
(22) Date of filing: 23.05.2002
(51) Int. Cl.: G01N 30/34

(54) **Anionic ion pairing compositions having volatile combustion products with O or S or halogen atoms or their combinations as heteroatoms for use with gas-phase or vapor-phase element-specific detectors**

(30) Priority: 23.05.2001 US 293150 P
(71) Applicant: THE TEXAS A & M UNIVERSITY SYSTEMS, College Station, TX 77843 (US)
(72) Inventor: Vigh, Gyula, Magnolia, Texas 77355 (US)
(74) Representative: W.P. Thompson & Co.

(57) **Abstract**

Non-interfering, anionic ion pairing reagents, anionic ion pairing reagent systems, or *in situ* formed anionic pairing ion and *in situ* formed anionic pairing ion systems having volatile combustion products with O or S or halogen atoms or combinations thereof as their only heteroatoms are disclosed along with their use in analytical techniques utilizing element specific detectors. The anionic ion pairing reagents, anionic ion pairing reagent systems, or *in situ* formed anionic pairing ion and *in situ* formed anionic pairing ion systems have volatile combustion products with O or S or halogen atoms as their only heteroatoms. Also, analytical techniques are disclosed using these anionic ion pairing reagents, anionic ion pairing reagent systems, or *in situ* formed anionic pairing ion and *in situ* formed anionic pairing ion systems.

## Description

### BACKGROUND OF THE INVENTION

### 1. Field of the Invention

The present invention relates to anionic ion pairing reagents and families of anionic ion pairing reagents, where combustion products of the reagents are volatile and include O atoms or S atoms or halogen atoms or combinations thereof as their only heteroatoms, and where the reagents can be used in conjunction with gas-phase or vapor-phase element-specific detectors.

More particularly, the present invention relates to anionic ion pairing reagents and families of anionic ion pairing reagents including an anion and a counterion, where combustion products of the reagents are volatile and include O atoms or S atoms or halogen atoms or combinations thereof as their only heteroatoms, and where the reagents can be used in conjunction with gas-phase or vapor-phase element-specific detectors (ESDs), such as nitrogen-selective gas-phase chemiluminescence detectors, nitrogen-phosphorus thermoionic detectors, atomic emission plasma detectors, inductively-coupled plasma -mass spectrometric (ICP-MS) detectors, element-specific GC detectors such as nitrogen or phosphorus specific GC detectors, *etc.*

### 2. Description of the Related Art

In order to form an anionic ion pairing reagent, an anion with a hydrophobic portion and a counterion, a cation, must be present. Typically, the hydrophobicity of the counterion is low to promote interactions between cationic analytes and the anionic pairing ions. The counterion of the anionic pairing ion can be derived either from strong electrolytes or weak electrolytes.

The typical anionic ion pairing reagents are derived from weak acids *(i.e.,* acids with pKₐ values in the 2 to 10 range) or strong acids and contain sufficiently hydrophobic alkyl, cycloalkyl, aryl or alkylaryl moieties. Typically, the weak acid-derived anionic pairing ions are carboxylate ions, phenolate ions, phosphate ions, phosphonate ions or boronate ions; while the strong acid-derived anionic pairing ions are sulfonate ions or organic sulfate ions. The counterions are typically alkali metal cations, alkaline earth metal cations, protonated amine cations, quaternary ammonium cations or phosphonium cations. Typically, ion pairing reagent compositions that contain only strong electrolyte ions are preferred, because they do not significantly alter the pH of the solutions that contain them, and because they typically do not participate in acid-base reactions.

Present anionic ion pairing reagents that include protonated amine cations or quaternary ammonium cations are undesirable when used with nitrogen-selective detectors, because they contribute a high background signal level; while alkali metal cations, alkaline earth metal cations or phosphonium cations are undesirable when used with gas-phase ESDs, because the combustion products of these counterions are not sufficiently volatile to leave the gas-phase detector systems as vapors or gases and they tend to contaminate the detector systems.

Thus, there is a need in the art for anionic ion pairing reagents and anionic ion pairing reagent systems whose combustion products do not significantly interfere with post-combustion element-specific detection or detector systems.

### SUMMARY OF THE INVENTION

The present invention provides anionic ion pairing reagent compositions, whose combustion products are volatile and include O atoms or S atoms or halogen atoms or combinations thereof as their only heteroatoms, and where the reagents can be used in conjunction with gas-phase or vapor-phase, element-specific detectors (ESDs), such as nitrogen-selective gas-phase chemiluminescence detectors, atomic emission plasma detectors, inductively-coupled plasma mass spectrometric (ICP-MS) detectors, element-specific GC detectors such as nitrogen or phosphorus specific GC detectors, *etc.*

The present invention also provides qualitative or quantitative analytical applications using the anionic ion pairing reagents of this invention for determination of an analyte including chromatographic, electrophoretic and extractive separation or flow-injection analysis of analytes which contain heteroatoms other than O or S or halogen atoms or their combinations.

The present invention also provides anionic ion pairing reagent compositions including an anion and a counterion, where the anion has a hydrophobic portion and a hydrophilic portion and where combustion products of the anion and the counterion are volatile and have only O or S or halogen atoms or combinations thereof as heteroatoms.

The present invention also provides anionic ion pairing reagent compositions formed *in situ* from a strong and/or weak acid and a base which react to form an anion and a counterion of this invention, where the anion has a hydrophobic portion and a hydrophilic portion, and where combustion products of the anion and the counterion are volatile and have only O or S or halogen atoms or combinations thereof as heteroatoms.

The present invention also provides an anionic ion pairing reagent system covering a desired hydrophobicity range including e.g further comprising, a plurality of anionic ion pairing reagents or *in situ* formed pairing ions of this invention.

The present invention also provides anionic ion pairing reagent compositions including an anion selected from the group consisting of carboxylate ions, phenolate ions, sulfonate ions, organic sulfate ions (R-O-S(O)₂-O⁻) and mixtures or combinations thereof having volatile combustion products with only O or S or halogen atoms or combinations thereof as heteroatoms.

The present invention also provides a counterion selected from the group consisting of oxonium ions, sulfonium ions, sulfoxonium ions and mixtures or combinations thereof having volatile combustion products with only O or S or halogen atoms or combinations thereof as heteroatoms.

For *in situ* formed pairing ions, the acids are selected from the group consisting of the acid forms of carboxylic ions, phenolate ions, sulfonate ions, organic sulfate ions (R-O-S(O)₂-OH) and mixtures or combinations thereof having volatile combustion products with only O or S or halogen atoms or combinations thereof as heteroatoms, and the bases are selected from the group consisting of oxonium hydroxides, sulfonium hydroxides, sulfoxonium hydroxides and mixtures or combinations thereof having volatile combustion products with only O or S or halogen atoms or combinations thereof as heteroatoms.

The present invention also provides an analytical system for detecting an analyte, where the system includes a combustion zone in which a sample including at least one analyte and at least one anionic pairing ion of this invention is converted to its corresponding combustion products and a detector capable of detecting at least one of the analyte combustion products.

The present invention also provides a method including the steps of dissolving a sample comprising at least one analyte in a solution comprising at least one anionic ion pairing reagent of this invention, combusting the solution and the sample to their corresponding combustion products and detecting at least one analyte combustion product.

The present invention also provides a method including the steps of dissolving a sample comprising at least one analyte in a solution comprising at least one anionic ion pairing reagent of this invention, combusting the solution and the sample to their corresponding combustion products, converting at least one of the analyte combustion products into a transformate and detecting at least one transformate.

The present invention also provides a method for forming an anionic ion pairing reagent *in situ* including the steps of dissolving at least one strong and/or weak acid having a hydrophobic portion in a solvent to form a solution, adding a base to the solution to convert the acid into an anionic pairing ion to be used according to the present invention, where combustion products of the acid and base are volatile and have only O or S or halogen atoms or combinations thereof as heteroatoms.

The present invention also provides an analytical system for detecting an analyte including a separation apparatus that separates a sample comprising an analyte or a plurality of analytes and at least one *in situ* formed anionic pairing ion or anionic ion pairing reagent of this invention, a combustion zone where each constituent is converted to its corresponding combustion products and a detector capable of detecting at least one analyte combustion product.

The present invention also provides an analytical system for detecting an analyte including a separation apparatus that separates a sample comprising an analyte or a plurality of analytes and at least one *in situ* formed anionic pairing ion or anionic ion pairing reagent of the present invention, a combustion zone where each constituent is converted to its corresponding combustion products, a transformation zone where at least one analyte combustion product is converted into a transformate and a detector capable of detecting at least one transformate.

The present invention also provides an analytical system for detecting an analyte including a separation apparatus that separates a solution comprising an analyte or a plurality of analytes and at least one *in situ* formed anionic pairing ion or anionic ion pairing reagent of this invention, a combustion zone where each constituent is converted to its corresponding combustion products and a detector capable of detecting at least one analyte combustion product.

The present invention also provides an analytical system for detecting an analyte including a separation apparatus that separates a solution comprising an analyte or a plurality of analytes and at least one *in situ* formed anionic pairing ion or anionic ion pairing reagent of the present invention, a combustion zone where each constituent is converted to its corresponding combustion products, a transformation zone where at least one analyte combustion product is converted into a transformate and a detector capable of detecting at least one transformate.

### DESCRIPTION OF THE DRAWINGS

The invention can be better understood with reference to the following detailed description together with the appended illustrative drawings in which like elements are numbered the same:

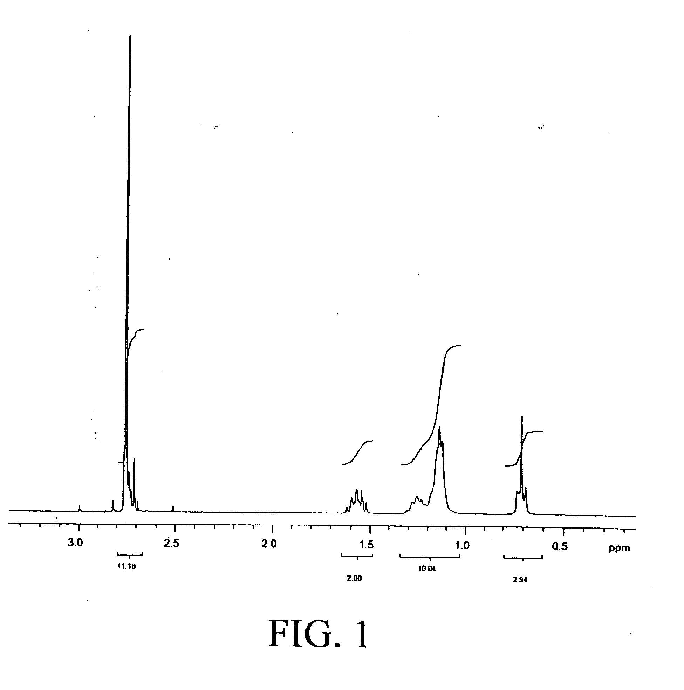

Figure 1 graphically depicts the 300 MHz ¹H NMR spectrum of the D₂O solution of trimethylsulfonium n-octylsulfonate, a typical, anionic ion pairing reagent composition of the present invention whose combustion products are volatile and free of heteroatoms other than O and S.

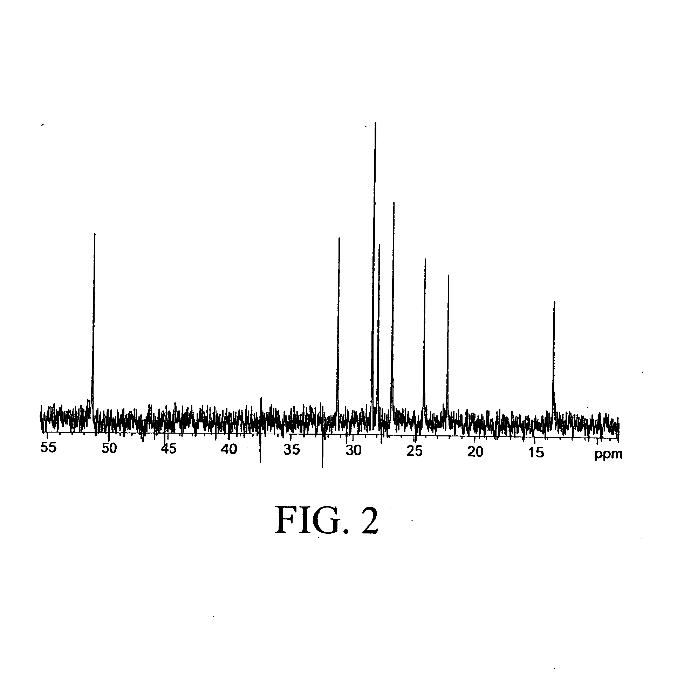

Figure 2 graphically depicts the 75 MHz ¹³C NMR spectrum of the D₂O solution of trimethylsulfonium n-octylsulfonate, a typical, anionic ion pairing reagent composition of the present invention whose combustion products are volatile and free of heteroatoms other than O and S.

### DETAILED DESCRIPTION OF THE INVENTION

The inventor has found that a new class of anionic ion pairing reagents and anionic ion pairing reagent systems can be constructed that allow element specific detection of analytes without the typical contamination of the analytes by the combustion products of the anionic ion pairing reagent components that contain a desired detectable element or lack the needed volatility to pass through the analytical system without fouling the system. The anionic ion pairing reagent compositions that have volatile combustion products and include only O or S or halogen atoms or their combinations as the only heteroatoms make possible the use of ESDs in areas which hitherto have been unaccessible to ESDs, because prior art anionic ion pairing reagent compositions included undesired heteroatoms (*e.g.*, nitrogen atoms in amines and quaternary ammonium compounds), or atoms whose combustion products are nonvolatile and cannot leave the analytical system components such as the ESDs as vapors or gases thereby contaminating the components such as the ESDs (*e.g*., phosphorus atoms in organophosphate and phosphonium compounds or metals).

The present invention broadly relates to anionic ion pairing reagents and families of anionic ion pairing reagents or *in situ* formed anionic pairing ions or families of *in situ* formed anionic pairing ions whose combustion products are volatile and have only O or S or halogen atoms or their combinations as heteroatoms, where the reagents or *in situ* formed anionic pairing ions can be used in conjunction with gas-phase or vapor-phase element-specific detectors.

Although the reagents are designed for use primarily in aqueous solution, where the solvent in water, the reagents can also be used with non-aqueous or mixed aqueous /non-aqueous solvent systems such as solvent systems including, water, a lower alcohol, a lower carboxylic acid, a lower ether, a lower cycle ether, a lower ester, a lower ketone, a lower haloalkane, and/or a lower hydrocarbon or mixtures and combinations thereof. The term lower means that the compounds contain 10 or fewer carbon atoms, preferably 8 or fewer carbon atoms, and particularly 6 or fewer carbon atoms. All of the solvents for use in this invention must have volatile combustion products with O or S or halogen atoms or combinations thereof as their only heteroatoms.

The present invention also relates to anionic ion pairing reagent systems capable of covering a desired hydrophobicity range comprised of a plurality of anionic ion pairing reagents or families of anionic ion pairing reagents or *in situ* formed anionic pairing ions of this invention.

The present invention also relates to an analytical system for detecting an analyte including a combustion chamber where an analyte dissolved in a solution comprising at least one anionic ion pairing reagent or *in situ* formed anionic pairing ion of this invention is converted to its corresponding combustion products and a detector capable of detecting at least one analyte combustion product.

The present invention also relates to a method including the steps of dissolving a sample including at least one analyte in a solution comprising at least one anionic ion pairing reagent or *in situ* formed anionic pairing ion of this invention, combusting the solution and the sample into their corresponding combustion products and detecting at least one combustion product of the analyte.

The present invention also relates to an analytical system for detecting an analyte including a separation apparatus where a sample comprising at least one analyte dissolved in a solution comprising at least one anionic ion pairing reagent or *in situ* formed anionic pairing ion of the present invention is separated into its constituents, a combustion chamber where each constituent of the sample is converted to its corresponding combustion products and a detector capable of detecting at least one analyte combustion product.

The anionic ion pairing reagents or reagent systems or *in situ* formed anionic pairing ions or pairing ion systems of this invention are characterized by at least the following properties: (1) each combustion product of each anionic ion pairing reagent or *in situ* formed anionic pairing ion is volatile at the operating conditions of the detection system and includes only O or S or halogen atoms or their combinations as heteroatoms; (2) each anionic ion pairing reagent or *in situ* formed anionic pairing ion includes a hydrophobic portion; (3) each anionic ion pairing reagent or *in situ* formed anionic pairing ion provides adequate ion pairing ability over its application range; and (4) each anionic ion pairing reagent or *in situ* formed anionic pairing ion permits variation of the solubility, hydrophobicity and/or electrophoretic mobility of the counterion(s) to match the requirements or constraints of the analytical system used.

An anionic ion pairing reagent of this invention comprises a weak acid-derived anion or a strong acid-derived anion and a strong base-derived cationic counterion. An *in situ* formed anionic pairing ion is derived from a weak acid and a base or a strong acid and a base.

Suitable anionic pairing ions for use in the construction of the anionic ion pairing reagents of this invention include anions having a hydrophilic portion and a hydrophobic portion, where the hydrophobic portion is sufficient to impart a desired hydrophobicity to the anion and where the anions form volatile combustion products and the combustion products include only O or S or halogen atoms or their combinations as heteroatoms at the operating conditions of the detection system.

Suitable hydrophobic portions or groups include, without limitation, alkyl, alkenyl, alkynyl, cycloalkyl, cycloalkenyl, cycloalkynyl, aromatic groups, halogenated derivatives thereof or combinations and mixtures thereof and suitable hydrophilic portions or groups include, without limitation, one or more carboxylate groups (-COO⁻), one or more sulfonate groups (-SO₃⁻), one or more organic sulfate half ester groups (-O-SO₃⁻) or mixtures or combinations thereof; all having volatile combustion products at the operating conditions of the detection system and where the combustion products include O or S or halogen atoms or combinations thereof as their only heteroatoms.

Exemplary anions for use in the anionic ion pairing reagents of this invention include, without limitation:

alkyl, alkenyl, alkynyl, cycloalkyl, cycloalkenyl, cycloalkynyl or aromatic monocarboxylates;

alkyl, alkenyl, alkynyl, cycloalkyl, cycloalkenyl, cycloalkynyl or aromatic moieties having two or more carboxylate groups,

alkyl, alkenyl, alkynyl, cycloalkyl, cycloalkenyl, cycloalkynyl or aromatic monosulfonates,

alkyl, alkenyl, alkynyl, cycloalkyl, cycloalkenyl, cycloalkynyl or aromatic moieties having two or more sulfonate groups,

alkyl, alkenyl, alkynyl, cycloalkyl, cycloalkenyl, cycloalkynyl or aromatic sulfate half esters,

alkyl, alkenyl, alkynyl, cycloalkyl, cycloalkenyl, cycloalkynyl or aromatic moieties having two or more sulfate half ester groups;

halogenated derivatives thereof or mixtures or combinations thereof, where all anions form volatile combustion products and include only O or S or halogen atoms or their combinations as heteroatoms at the operating conditions of the detection system.

Suitable cationic counterions for use in the construction of anionic pairing ion reagents of this invention include, without limitation, oxonium cations, sulfonium cations, sulfoxonium cations or mixture or combinations thereof, where all counterions form volatile combustion products that include only O or S or halogen atoms or their combinations as heteroatoms at the operating conditions of the detection system.

Exemplary acids for *in situ* formed anionic pairing ions of this invention include, without limitation:

alkyl, alkenyl, alkynyl, cycloalkyl, cycloalkenyl, cycloalkynyl or aromatic monocarboxylic acids;

alkyl, alkenyl, alkynyl, cycloalkyl, cycloalkenyl, cycloalkynyl or aromatic moieties having two or more carboxylic acid groups,

alkyl, alkenyl, alkynyl, cycloalkyl, cycloalkenyl, cycloalkynyl or aromatic monosulfonic acids,

alkyl, alkenyl, alkynyl, cycloalkyl, cycloalkenyl, cycloalkynyl or aromatic moieties having two or more sulfonic acid groups,

alkyl, alkenyl, alkynyl, cycloalkyl, cycloalkenyl, cycloalkynyl or aromatic sulfate half esters in their acid form,

alkyl, alkenyl, alkynyl, cycloalkyl, cycloalkenyl, cycloalkynyl or aromatic moieties having two or more sulfate half ester groups in their acid forms;

halogenated derivatives thereof or mixtures or combinations thereof, where all anions form volatile combustion products and include only O or S or halogen atoms or their combinations as heteroatoms at the operating conditions of the detection system.

Suitable bases for *in situ* forming of anionic pairing ions from weak and/or strong acids include, without limitation, oxonium hydroxides, sulfonium hydroxides, sulfoxonium hydroxides or mixture or combinations thereof, where all bases form volatile combustion products that include only O or S or halogen atoms or their combinations as heteroatoms at the operating conditions of the detection system.

Preferred anionic pairing ions for use in the construction of anionic ion pairing reagents of this invention having volatile combustion products with O or S or halogen atoms or their combinations as their only heteroatoms at the operating conditions of the detection system include, without limitation, n-alkylcarboxylate ions, n-alkylsulfonate ions, n-alkylsulfate ions or mixtures or combinations thereof, where the n-alkyl groups have one or more carbon atoms, preferably two or more carbon atoms, particularly three or more carbon atoms, and especially four or more carbon atoms. For *in situ* formed anionic pairing ions, the corresponding acids are preferred.

Particularly preferred S-containing anionic pairing ions for use in the construction of anionic ion pairing reagents of this invention having volatile combustion products with O or S or halogen atoms or their combinations as their only heteroatoms at the operating conditions of the detection system include, without limitation, n-alkylsulfonate ions or n-alkylsulfate ions or mixtures or combinations thereof where the n-alkyl group has one or more carbon atoms, preferably two or more carbon atoms, particularly three or more carbon atoms, and especially four or more carbon atoms. For *in situ* formed anionic pairing ions, the corresponding acids are preferred.

Preferred cationic counterions for use in the construction of anionic pairing ion reagents of this invention having volatile combustion products with O or S or halogen atoms or their combinations as their only heteroatoms at the operating conditions of the detection system include, without limitation, aryl pyrillium ions, R¹, R², R³-sulfonium ions, or R¹, R², R³-sulfoxonium ions or mixtures or combinations thereof, where R¹, R² and R³ are the same or different and are an alkyl group, cycloalkyl group, alkylcycloalkyl group, alkylaryl group, cycloalkylaryl group, arylalkyl group, arylcycloalkyl group, aryl group, alkyleneoxide group, alkylenesulfide group or halogenated derivatives thereof. Generally, the Rⁱ groups (i=1,2 or 3) have fewer than 20 carbon atoms, preferably, fewer than 10 carbon atoms, particularly, fewer than 5 carbon atoms, and especially, fewer than 2 carbon atoms, where the Rⁱ can be used to adjust the solubility, hydrophobic-hydrophilic balance and/or electrophoretic mobility of the counterion. For *in situ* formed anionic pairing ions, the corresponding bases are preferred.

Exemplary examples of cationic counterions for use in the construction of anionic ion pairing reagents of this invention having volatile combustion products with O or S or halogen atoms or their combinations as their only heteroatoms at the operating conditions of the detection system include, without limitation, trimethylsulfonium ion, which can be obtained from trimethylsulfonium iodide, diethylmethylsulfonium ion, which can be obtained from its respective alkyl sulfide and methyl iodide, trimethylsulfoxonium ion, which can be obtained from trimethylsulfoxonium iodide, diethylmethylsulfoxonium iodide, which can be prepared from its respective alkyl sulfoxides and methyl iodide. For *in situ* formed anionic pairing ions, the corresponding bases can be obtained by conversion of the respective iodide salts.

The anionic ion pairing reagents of this invention can be produced in a number of ways, including, without limitation: (1) the reaction of the parent acid of a respective anionic pairing ion with the parent base of a desired counterion; (2) the percolation of the parent acid of a respective anionic pairing ion or its salt through a cation exchange column containing a desired counterion; or (3) the extraction of a respective ion pair with an organic solvent from an aqueous solution that holds a mixture of the parent acid of the respective anionic pairing ion or its salt and the parent base of a desired counterion or its salt. The ion pairing reagents of this invention can be stored and/or used either as solids or-solutions.

*In situ* formed anionic pairing ions of this invention can be produced in a number of ways, including, without limitation: (1) adding one or more desired weak and/or strong acid to a solution containing a desired base and (2) adding a desired base to a solution containing one or more desired weak and/or strong acid.

All references cited herein are incorporated by reference. While this invention has been described fully and completely, it should be understood that the invention may be practiced otherwise than as specifically described. Although the invention has been disclosed with reference to its preferred embodiments, from reading this description those of skill in the art may appreciate changes and modification that may be made which do not depart from the scope and spirit of the invention as described above.

## Claims

1. An anionic ion pairing composition comprising:
at least one anion; and
at least one counterion,
where the anions and counterions have volatile combustion products including O or S or halogen atoms or combinations thereof as their only heteroatoms.

2. A composition as claimed in claim 1, wherein the anion has a desired hydrophobicity.

3. A composition as claimed in claim 1 or 2, wherein:
the anion is selected from the group consisting of carboxylate ions, phenolate ions, sulfonate ions, organic sulfate ions and mixtures or combinations thereof; and
the counterion is selected from the group consisting of oxonium ions, sulfonium ions, sulfoxonium ions and mixtures or combinations thereof.

4. A composition as claimed in any one of the preceding claims comprising:
a plurality of counterions,
where each counterion has volatile combustion productions including O or S or halogen atoms or combinations thereof as their only heteroatoms.

5. A composition as claimed in any one of the preceding claims, comprising:
a plurality of anions,
where each anion has volatile combustion productions including O or S or halogen atoms or combinations thereof as their only heteroatoms.

6. A composition as claimed in any one of the preceding claims comprising:
a plurality of anions; and
a plurality of counterions,
where each anion and counterion have volatile combustion productions including O or S or halogen atoms or combinations thereof as their only heteroatoms.

7. A composition as claimed in claim 6, wherein the composition covers a desired hydrophobicity range.

8. A composition as claimed in claim 6, wherein:
the anions are selected from the group consisting of carboxylate ions, phenolate ions, sulfonate ions, organic sulfate ions and mixtures or combinations thereof; and
the counterions are selected from the group consisting of oxonium ions, sulfonium ions, sulfoxonium ions and mixtures or combinations thereof.

9. An anionic ion pairing composition for use in element-specific detection systems comprising a solution comprising:
a solvent;
an anion selected from the group consisting of carboxylate ions, phenolate ions, sulfonate ions, organic sulfate ions and mixtures or combinations thereof; and
a counterion selected from the group consisting of oxonium ions, sulfonium ions, sulfoxonium ions and mixtures or combinations thereof,
where the anion and counterion and the solvent have volatile combustion products including O or S or halogen atoms or combinations thereof as their only heteroatoms.

10. A composition as claimed in claim 9, wherein the anion has a desired hydrophobicity.

11. An anionic ion pairing composition for use in element-specific detection systems comprising:
a solvent;
a plurality of anions selected from the group consisting of carboxylate ions, phenolate ions, sulfonate ions, organic sulfate ions and mixtures or combinations thereof; and
a plurality of counterions selected from the group consisting of oxonium ions, sulfonium ions, sulfoxonium ions and mixtures and combinations thereof,
where the anions and counterions and the solvent have volatile combustion products including O or S or halogen atoms or combinations thereof as their only heteroatoms.

12. A composition as claimed in claim 11, wherein the composition covers a desired hydrophobicity range.

13. An apparatus for detecting an analyte comprising:
a separation component where a sample is separated into its components, where the sample comprises at least one analyte and at least one anion and at least one counterion, where the anions and counterions have volatile combustion products including O or S or halogen atoms or combinations thereof as their only heteroatoms and where at least one combustion product of the analyte is detectable;
a combustion zone where the sample is converted to its corresponding combustion products;
a gas-phase or vapour-phase element-specific detector (ESD) capable of detecting the at least one analyte combustion product.

14. An apparatus as claimed in claim 13, further comprising:
a transformation zone where at least one sample combustion product is converted into a transformate and a detector capable of detecting at least one transformate.

15. An apparatus as claimed in claim 13 or 14, wherein the ESD is selected from the group consisting of nitrogen-selective gas-phase chemiluminescence detectors, sulfur-selective gas-phase chemiluminescence detectors, nitrogen-phosphorus thermoionic detectors, atomic emission plasma detectors, inductively-coupled plasma - mass spectrometric (ICP-MS) detectors, and element-specific GC detectors such as nitrogen or phosphorus specific GC detectors.

16. An apparatus as claimed in any one of claims 13 to 15, wherein the anion has a desired hydrophobicity.

17. An apparatus as claimed in any one of claims 13 to 16, wherein the anions covers a desired hydrophobicity range.

18. An apparatus as claimed in any one of claims 13 to 17, wherein:
the anion is selected from the group consisting of carboxylate ions, phenolate ions, sulfonate ions, organic sulfate ions and mixtures or combinations thereof; and
the counterion is selected from the group consisting of oxonium ions, sulfonium ions, sulfoxonium ions and mixtures and combinations thereof.

19. A method for analysing an analyte comprising the steps of:
introducing a sample comprising at least one analyte and at least one anion and at least one counterion into a combustion zone, where the anions and counterions have volatile combustion products including O or S or halogen atoms or combinations thereof as their only heteroatoms;
converting the sample, in the combustion zone, into its corresponding volatile combustion products including at least one analyte combustion product;
measuring the at least one analyte combustion product with a gas-phase or vapor-phase element-specific detector to produce a detector signal; and
determinating an analyte concentration in the sample from the detector signal.

20. A method as claimed in claim 19, further comprising the step of:
converting the at least one analyte combustion product into a transformate; and detecting the transformate.

21. A method as claimed in claim 19 or 20, wherein the anion has a desired hydrophobicity.

22. A method as claimed in claim 19, 20 or 21, wherein the anions cover a desired hydrophobicity range.

23. A method as claimed in any one of claims 19 to 22, wherein:
the anions are selected from the group consisting of carboxylate ions, phenolate ions, sulfonate ions, organic sulfate ions and mixtures or combinations thereof; and
the counterions are selected from the group consisting of oxonium ions, sulfonium ions, sulfoxonium ions and mixtures and combinations thereof.

24. A method for forming an anionic ion pairing reagent *in situ* comprising the steps of:
dissolving an acid form of an anion in a solvent to form a solution, where the acid form of the anion has volatile combustion products including O or S or halogen atoms or mixtures and combinations thereof as their only heteroatoms;
adding an amount of a base form of a counterion to the solution, where the base form of the counterion has volatile combustion products including O or S or halogen atoms or mixtures and combinations thereof as their only heteroatoms, and where the amount is sufficient to convert substantially all of the acid form of the anion to its corresponding anion to form an *in situ* formed anionic ion pairing reagent; and adding a sample comprising at least one analyte to the solution containing the *in situ* formed anionic ion pairing reagent.
25. A method as claimed in claim 24, wherein the anion has a desired hydrophobicity.
26. A method as claimed in claim 24 or 25, wherein the anions cover a desired hydrophobicity range.
27. A method as claimed in any one of claims 24 to 26, wherein:
the anion is selected from the group consisting of carboxylate ions, phenolate ions, sulfonate ions, organic sulfate ions and mixtures or combinations thereof; and
the counterion is selected from the group consisting of oxonium ions, sulfonium ions, sulfoxonium ions and mixtures and combinations thereof.
